# EUROPÄISCHE PATENTSCHRIFT

(11) **EP 1 307 793 B1**
(45) Veröffentlichungstag und Bekanntmachung des Hinweises auf die Patenterteilung: **17.03.2004**
(21) Anmeldenummer: 01956395.6
(22) Anmeldetag: 27.07.2001
(51) Int. Cl.: G05B 19/042

(54) **VERFAHREN ZUM BETRIEB EINER SICHERHEITSSCHALTVORRICHTUNG UND SICHERHEITSSCHALTVORRICHTUNG**
METHOD FOR OPERATING A SAFETY SWITCHING DEVICE AND A SAFETY SWITCHING DEVICE
PROCEDE POUR EXPLOITER UN DISPOSITIF DE COMMUTATION DE SECURITE ET DISPOSITIF DE COMMUTATION DE SECURITE

(30) Priorität: 09.08.2000 DE 10038953
(43) Veröffentlichungstag der Anmeldung: 07.05.2003
(73) Patentinhaber: SIEMENS AKTIENGESELLSCHAFT, 80333 München (DE)
(72) Erfinder: HEBERLEIN, Thomas, 92694 Etzenricht (DE); KÖNIG, Mathias, 91284 Neuhaus an der Pegnitz (DE)
(86) Internationale Anmeldenummer: PCT/DE2001/002850
(87) Internationale Veröffentlichungsnummer: WO 2002/013388

(56) Entgegenhaltungen:
- DE-A- 4 342 991
- GIESELMANN M: "FINGER-GUARD. SIGUARD-INNOVATIVE SAFETY TECHNOLOGY FOR PRESS CONTROLS" DRIVE AND CONTROL, SIEMENS AKTIENGESELLSCHAFT, BERLIN, DE, Bd. 6, Nr. 3, 1. Oktober 1996 (1996-10-01), Seiten 20-21, XP000636796 ISSN: 0939-8007 in der Anmeldung erwähnt

## Beschreibung

Die Erfindung bezieht sich auf ein Verfahren zum Betrieb einer Sicherheitsschaltvorrichtung und auf eine solche Sicherheitsschaltvorrichtung.

Eine Sicherheitsschaltvorrichtung wird in Schaltanlagen eingesetzt, um eine erhöhte Sicherheit zu ermöglichen. Die Sicherheitsschaltvorrichtung überwacht hierzu eine externe elektrische Einrichtung und schaltet in Abhängigkeit des Überwachungsergebnisses die Energieversorgung zu einem elektrischen Gerät. Gerät und Einrichtung können dasselbe sein. Der Sicherheitsschaltvorrichtung ist also sowohl eine Überwachungsfunktion als auch eine Arbeitsfunktion, beispielsweise die Schaltfunktion, zugeordnet. Unter elektrische Einrichtung wird hierbei sowohl eine einzelne Komponente als auch ein Strom- oder Schaltkreis verstanden. Beispielsweise wird mittels der Sicherheitsschaltvorrichtung der Einschaltkreis und der Not-Ausschaltkreis für einen Motor überwacht. Das elektrische Gerät wäre in diesem Fall der Motor, also ein Verbraucher. Die Sicherheitsschaltvorrichtung schaltet in der Regel den Verbraucher nicht unmittelbar, sondern mittelbar über spezielle Schaltgeräte. Insbesondere steuert die Sicherheitsschaltvorrichtung ein verbraucherspezifisches Schaltgerät, beispielsweise einen Motorschütz oder einen Hilfsschütz für einen solchen Motorschütz.

Die Sicherheitsschaltvorrichtung weist üblicherweise eine Schaltung auf, die die Überwachungsfunktion übernimmt, und die elektromechanische Schaltelemente umfasst, beispielsweise Relais, um den Stromfluss zum besagten Hilfsschütz zu unterbrechen. Eine derartige Sicherheitsschaltvorrichtung wird üblicherweise in weniger komplexen Anlagen oder Anlagenteilen eingesetzt, in denen nur wenige Einrichtungen überwacht oder wenige Geräte geschaltet werden müssen.

Die Sicherheitsschaltvorrichtung wird auch als Sicherheitskombination bezeichnet. Beispiele für derartige Sicherheitskombinationen sind die "SIGUARD"-Sicherheitskombinationen der Baureihe 3TK28 der Siemens AG. Diese Sicherheitskombinationen sind im Vergleich zu einer Sicherheitseinrichtung auf Basis einer speicherprogrammierbaren Steuerung deutlich weniger aufwendig. Eine solche Sicherheitseinrichtung ist sehr flexibel und wird insbesondere in komplexen Anlagen eingesetzt. Sie wird durch eine entsprechende Programmierung an die speziellen Anforderungen angepasst und übernimmt im Allgemeinen auch Überwachungs- und Steuerungsfunktionen. Ein Beispiel für eine solche Sicherheitseinrichtung ist beispielsweise die "SIMATIC"-Baureihe der Siemens AG.

Für die Sicherheitsschaltvorrichtung bestanden bis vor kurzem gesetzliche Normen, wonach insbesondere die Schaltelemente der Vorrichtung als elektromechanische Bauteile ausgebildet sein mussten. Diese Anforderung ist mittlerweile entfallen. Die sicherheitstechnischen Anforderungen an eine solche Sicherheitsschaltvorrichtung werden nunmehr beispielsweise in der Norm EN954-1 geregelt. In dieser Norm sind unterschiedliche Kategorien vorgesehen, wobei die Kategorie 4 der höchsten Sicherheitsstufe entspricht. Um die Kategorie 4 zu erreichen, ist es notwendig, dass alle sicherheitstechnisch relevanten Bauteile redundant und vorzugsweise auch diversitär ausgeführt sind.

Da die Schaltung der Sicherheitsschaltvorrichtung nunmehr nicht mehr ausschließlich elektromechanisch ausgebildet sein muss, wird der Einsatz von elektronischen Bauteilen angestrebt. Insbesondere bietet sich aufgrund der Überwachungs- und Arbeitsfunktion der Einsatz eines Mikroprozessors an. Da dieser ein sicherheitsrelevantes Bauteil ist, muss er für die Kategorie 4 der EN954-1 redundant und vorzugsweise auch diversitär ausgebildet sein. Um dieses Erfordernis zu erfüllen, besteht die Möglichkeit, zwei hardwaretechnisch unterschiedlich ausgebildete Mikroprozessoren vorzusehen. Bei der Verwendung von gleichen Mikroprozessoren sind deren jeweilige Betriebssoftware, die sogenannte Firmware, unterschiedlich, um eine diversitäre Ausbildung zu gewährleisten. Bei unterschiedlichen hardwaretechnischen Ausgestaltungen ist diese Betriebssoftware zwangsläufig diversitär. Die diversitäre Ausgestaltung der Betriebssoftware hat jedoch den Nachteil, dass für jeden Mikroprozessor die Betriebssoftware eigens programmiert werden muss. Insbesondere Anpassungen, Änderungen oder Ergänzungen müssen daher jeweils in doppelter Ausführung vorgenommen werden.

Aus der DE 43 42 991 A1 ist ein Verfahren zum Überwachen einer sicherheitsredundanten Funktion, insbesondere eines brennstoffbeheizten Geräts, zu entnehmen. Hierbei sind zwei Mikroprozessoren vorgesehen, die nach jeder Inbetriebnahme des Geräts wechselweise von einem Masterstatus zu einem Slavestatus wechseln. Dies hat jedoch den Nachteil, dass während des Betriebs keine Redundanz gegeben ist.

Der Erfindung liegt die Aufgabe zugrunde, ein möglichst einfaches Verfahren zum Betrieb einer Sicherheitsschaltvorrichtung und eine möglichst einfache Sicherheitsschaltvorrichtung anzugeben, wobei eine hohe Sicherheitsstufe gewährleistet ist.

Zur Lösung der auf ein Verfahren zum Betrieb einer Sicherheitsschaltvorrichtung gerichteten Aufgabe ist ein Verfahren mit den Merkmalen des Anspruches 1 vorgesehen.

Das wesentliche Element ist hierbei darin zu sehen, dass die Mikroprozessoren wechselweise unterschiedliche Funktionen übernehmen. Auf den beiden Mikroprozessoren laufen zur gleichen Zeit daher niemals die gleichen Routinen ab. Damit ist eine sogenannte "dynamische" diversitäre Ausgestaltung erreicht. Gleichzeitig sind zwei Mikroprozessoren vorhanden, so dass das sicherheitstechnische Erfordernis der Redundanz ebenfalls erfüllt ist.

Die Redundanz sowie die Diversität werden hierbei durch einen Ablaufzyklus erreicht, während dessen der eine Mikroprozessor als Hauptprozessor (Master) Hauptfunktionen und der andere Mikroprozessor als Nebenprozessor (Slave) Nebenfuhktionen übernimmt, und wobei nach einer definierten Anzahl von Ablaufzyklen der eine Mikroprozessor in den Status des Nebenprozessors und der andere Mikroprozessor in den Status des Hauptprozessors wechselt. Die wechselweise Übernahme unterschiedlicher Funktionen ist also an einen bestimmten Ablaufzyklus gekoppelt. Die Hauptfunktionen des Hauptprozessors sind hierbei insbesondere die eigentlichen Arbeitsfunktionen der Sicherheitsschaltvorrichtung, also insbesondere die Schaltfunktion. Die Nebenfunktionen sind insbesondere Überwachungsfunktionen. Der Hauptprozessor fungiert daher als "Arbeiter" während der Nebenprozessor als "Überwacher" dient.

Vorzugsweise übernehmen dabei die Mikroprozessoren als Funktionen sowohl eine Überwachungsfunktion als auch eine Arbeitsfunktion, insbesondere eine Schaltfunktion, indem sie die Ansteuerung eines elektronischen Schaltelements in der Sicherheitsschaltvorrichtung übernehmen. Dieses elektronische Schaltelement schaltet die Energieversorgung zum elektrischen Gerät. Vorzugsweise werden dabei von den Mikroprozessoren sämtliche Überwachungsfunktionen, also sowohl die Überwachung des oder der elektrischen externen Einrichtungen, als auch die interne Überwachung der Sicherheitsschaltvorrichtung und die wechselweise Überwachung der Mikroprozessoren, vorgenommen. Damit wird die Möglichkeit der Mikroprozessoren, umfangreiche und komplexe Aufgaben zu übernehmen, im Rahmen der Anfordernisse einer Sicherheitsschaltvorrichtung ausgeschöpft.

Um eine möglichst einfache Ausgestaltung der Schaltvorrichtung zu gewährleisten, weisen die Mikroprozessoren den gleichen hardwaretechnischen Aufbau auf. Die Mikroprozessoren sind also identisch ausgebildet.

Zweckdienlicherweise werden darüber hinaus die Mikroprozessoren mit der gleichen Betriebssoftware betrieben. Die Mikroprozessoren sind daher vorzugsweise sowohl im Hinblick auf ihren hardwaretechnischen als auch im Hinblick auf ihren softwaretechnischen Aufbau identisch. Dies hat den Vorteil, dass eine Verwechslung der Mikroprozessoren beim Zusammenbau der Sicherheitsschaltvorrichtung nicht auftreten kann. Zudem ist aufgrund der einheitlichen Betriebssoftware bei Änderungen oder Ergänzungen die Anpassung der Betriebssoftware und der notwendigen Dokumentation nur einmal vorzunehmen.

Gemäß einer zweckdienlichen Ausgestaltung werden während jedes Ablaufzyklusses bestimmte Primärfunktionen und zusätzlich optionale Sekundärfunktionen ausgeführt, wobei während verschiedener Ablaufzyklen unterschiedliche Sekundärfunktionen ausgeführt werden. Damit wird ein möglichst kurzer Ablaufzyklus erreicht. Während jedem Ablaufzyklus werden daher immer die wesentlichen Funktionen ausgeführt und zusätzlich einige Sekundärfunktionen, deren Ausführung weniger oft erforderlich ist. Zu den Primärfunktionen zählen insbesondere die Arbeitsfunktionen, wohingegen zu den Sekundärfunktionen beispielsweise die Überwachung der Speicher der Mikroprozessoren oder auch die Durchführung bestimmter gerätespezifischer Tests zählen. Der Aufteilung in Primärfunktionen und Sekundärfunktionen liegt die Überlegung zugrunde, dass nicht alle möglichen Fehler innerhalb der gleichen Zeitspanne aufgedeckt werden müssen. Einige Fehler der Sicherheitsschaltvorrichtung oder in deren Umgebung brauchen beispielsweise erst nach wenigen Minuten aufgedeckt zu werden.

Vorzugsweise ist die Zeitdauer des Ablaufzyklusses kleiner als 100ms und insbesondere kleiner als 30ms. Damit wird gewährleistet, dass beispielsweise nach Betätigen eines Not-Ausschalters für das Gerät bis zum Auslösen der Unterbrechung der Energieversorgung zu dem Gerät durch das Schaltelement der Sicherheitsschaltvorrichtung maximal die Zykluszeit verstreicht.

Aus sicherheitstechnischen Gründen ist es hierbei vorgesehen, dass die einzelnen Schritte des Ablaufzyklusses sequentiell nacheinander erfolgen, dass also ein sogenannter "Interupt"-Betrieb nicht erfolgt. Dies bedeutet, dass im Rahmen des Ablaufzyklusses ein bestimmter Ablaufschritt vorgesehen ist, bei dem die Funktion "Schalten" ausgeführt wird, sofern ein entsprechendes Signal beispielsweise vom Not-Ausschalter anliegt. Geht ein solches Signal ein, wenn sich der Ablaufzyklus an einer anderen Position befindet, so muss zunächst abgewartet werden, bis der Ablaufzyklus wieder den Ablaufschritt mit der Schaltfunktionalität erreicht.

Zweckdienlicherweise werden auf dem Hauptprozessor und dem Nebenprozessor unterschiedliche Ablaufprogramme während eines Ablaufzyklusses ausgeführt, wobei jedes der Ablaufprogramme für die Ausführung von unterschiedlichen Funktionen verantwortlich ist, und wobei die Ablaufprogramme miteinander synchronisiert werden. Damit wird verhindert, dass die Ablaufzyklen der einzelnen Mikroprozessoren auseinander laufen, und unter Umständen einer der Mikroprozessoren bereits vom "Masterstatus" in den "Slavestatus" wechselt, während der andere Mikroprozessor noch im "Slavestatus" ist. In diesem Falle wäre zumindest für einen gewissen Zeitraum eine diversitäre Ausbildung nicht mehr verwirklicht.

Insbesondere um sich gegenseitig zu überprüfen kommunizieren die Mikroprozessoren vorzugsweise miteinander. Darüber hinaus dient diese Kommunikation auch zum Datenabgleich und Datenaustausch. Zweckdienlicherweise nimmt hierbei jeweils nur einer der Mikroprozessoren eine aktive Rolle ein.

Bevorzugt erfolgt die Synchronisation durch die Kommunikation der beiden Mikroprozessoren miteinander, indem sowohl im Ablaufprogramm des Hauptprozessors als auch in dem des Nebenprozessors die Kommunikation zum gleichen Zeitpunkt oder im gleichen Zeitfenster vorgesehen ist. Läuft der eine Hauptprozessor etwas voraus, so ist er dadurch notwendigerweise im Ablauf seines Programms angehalten und muss warten bis der andere Mikroprozessor ebenfalls zur Kommunikation bereit ist.

Um insbesondere ein gleichzeitiges Umschalten der beiden Mikroprozessoren jeweils von dem Master- in den Slavestatus oder umgekehrt zu ermöglichen, ist die Kommunikation vorzugsweise am Ende des Ablaufzyklusses vorgesehen.

Zur Gewährleistung eines sicheren Betriebs wird zweckdienlicherweise bei der Inbetriebnahme der Sicherheitsschaltvorrichtung ermittelt, welcher Mikroprozessor zunächst als Hauptprozessor und welcher als Nebenprozessor arbeitet. Damit wird also klar und eindeutig festgelegt, wer zunächst der Hauptprozessor ist.

Bevorzugt ist dabei vorgesehen, dass prinzipiell einer der beiden Mikroprozessoren zunächst grundsätzlich als Hauptprozessor ausgewählt wird. Dies lässt sich konstruktiv vergleichsweise einfach lösen, beispielsweise indem durch eine entsprechende Pin-Belegung eines der beiden Mikroprozessoren dieser entsprechend vorkonfiguriert ist. Alternativ hierzu wird vorzugsweise in Abhängigkeit des Zeitpunkts der Betriebsbereitschaft der Mikroprozessoren die Auswahl vorgenommen. Dabei bietet sich an, durch eine Zeitverzögerung bei einem der Mikroprozessoren das Hochfahren etwas zu verzögern. Gewöhnlicherweise wird bei der Inbetriebnahme nachdem der Mikroprozessor mit Spannung versorgt ist ein "Reset" eingeleitet, um einen definierten Ausgangszustand des Mikroprozessors zu erreichen (power on reset, POR). Erst nach dem Reset ist der Mikroprozessor betriebsbereit. Daher wird insbesondere bei einem der beiden Prozessoren dieser Reset vergleichsweise spät ausgeführt.

Zur Lösung der auf die Sicherheitsschaltvorrichtung gerichteten Aufgabe ist diese gemäß der Erfindung mit den Merkmalen des Anspruches 13 ausgebildet.

Die im Hinblick auf das Verfahren angeführten Vorteile und vorteilhaften Ausgestaltungen sind sinngemäß auch auf die Sicherheitsschaltvorrichtung zu übertragen. Bevorzugte Weiterbildungen der Sicherheitsschaltvorrichtung sind den Unteransprüchen zu entnehmen.

Ein Ausführungsbeispiel der Erfindung wird im Folgenden anhand der Figuren näher erläutert. Es zeigen:
- FIG 1: ein schematisches und stark vereinfachtes Schaltbild einer Sicherheitsschaltvorrichtung mit einem Einschaltkreis und einem Ausschaltkreis für einen elektrischen Verbraucher, und
- FIG 2: ein Ablaufbild eines Ablaufzyklusses in schematischer Darstellung.

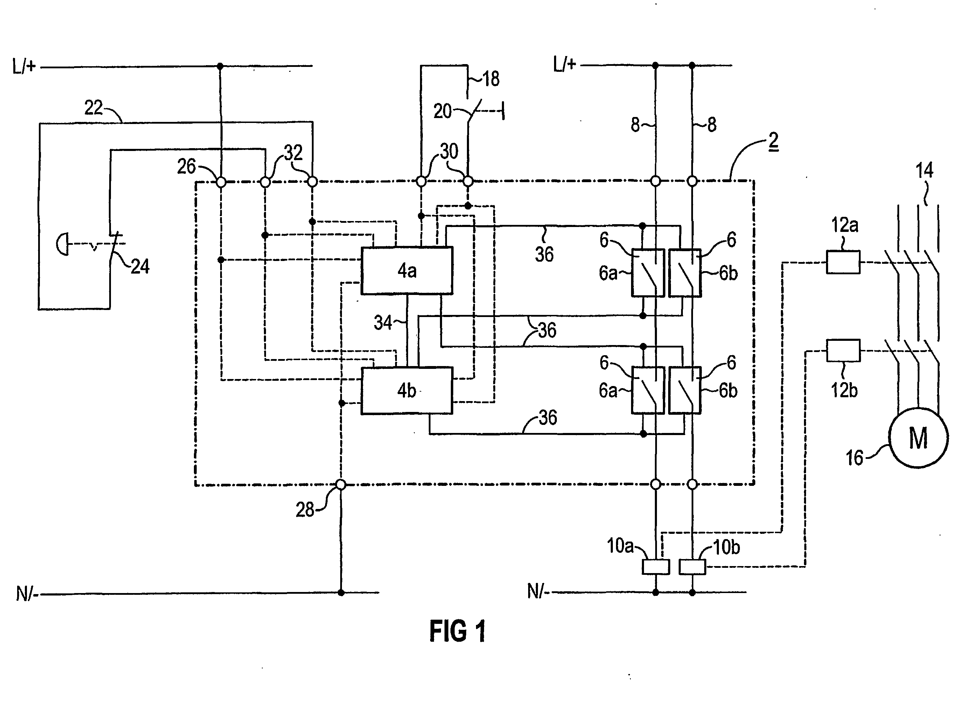

Gemäß FIG 1 umfasst eine Sicherheitsschaltvorrichtung 2, auch als Sicherheitskombination bezeichnet, einen ersten Mikroprozessor 4a und einen zweiten Mikroprozessor 4b sowie insgesamt vier Schaltelemente 6, die insbesondere als elektronische Schaltelemente ausgeführt sind. Die Schaltelemente 6 sind in Paaren 6a,6b angeordnet, wobei jeweils ein Paar (6a,6b) in Serie in eine Versorgungsleitung 8 für jeweils einen Hilfsschütz 10a,10b angeordnet sind. Die Hilfsschütze 10a,10b sind also elektrische Geräte, deren Energieversorgung von der Sicherheitsschaltvorrichtung 2 unmittelbar geschaltet wird.
Über die beiden Hilfsschütze 10a,10b werden Motorschütze 12a,12b betätigt. Diese Motorschütze 12a,12b dienen zur Unterbrechung eines Drehstromnetzes 14 für einen als Motor 16 ausgebildeten Verbraucher und sind ebenfalls in Serie geschalten. Damit wird der Motor 16 als elektrisches Gerät mittelbar von der Sicherheitsschaltvorrichtung 2 geschaltet. Zum Ein- und Ausschalten des Motors 16 ist ein Einschaltkreis 18 mit einem Einschalttaster 20 sowie ein Ausschaltkreis 22 mit einem Not-Austaster 24 vorgesehen. Sowohl der Einschaltkreis 18 als auch der Ausschaltkreis 22 sind jeweils an der Sicherheitsschaltvorrichtung 2 über Anschlüsse 30 bzw. 32 angeschlossen. Diese wird über Versorgungsanschlüsse 26,28 an das positive Potential L/+ bzw. an das negative Potential N/- einer Gleichstromquelle angeschlossen. In der Regel wird die Sicherheitsschaltvorrichtung 2 mit 24V betrieben.

Die beiden Mikroprozessoren 4a,4b stehen jeweils mit den beiden Anschlüssen 32 des Ausschaltkreises 22 sowie mit den beiden Anschlüssen 30 des Einschaltkreises 18 in Verbindung. Zugleich ist jeder der Mikroprozessoren 4a,4b mit jedem der Schaltelemente 6 verbunden.

Durch die jeweils paarweise Anordnung der Mikroprozessoren 4a,4b und der Anordnung von Paaren 6a,6b von Schaltelementen 6 ist eine redundante und sichere Ausgestaltung der Sicherheitsschaltvorrichtung 2 erzielt. Die Redundanz wird auf Seiten des Motors 16 durch jeweils zwei Hilfsschütze 10a,10b und zwei Motorschütze 12a,12b erreicht.

Die Sicherheitsschaltvorrichtung 2 hat mehrere Funktionen. Zum einen erfasst sie Signale aus dem Einschaltkreis 18 sowie aus dem Ausschaltkreis 22 und übermittelt sie an den Motor 16, indem die Schaltelemente 6 betätigt werden. Die hiermit verbundenen Funktionen werden als Arbeitsfunktionen AF bezeichnet. Gleichzeitig werden diese beiden Schaltkreise 18,20 überwacht, die im Sinne dieser Anmeldung elektrische Einrichtungen darstellen. Beispielsweise werden die beiden Schaltkreise 18,20 auf Kurzschluss zu dem positiven Potential L/+ oder dem negativen Potential N/- oder auf einen Schluss zwischen den beiden Schaltkreisen überwacht. Zusätzlich zu der Überwachung der beiden Schaltkreise 18,22 besteht darüber hinaus die Möglichkeit, dass auch die Hilfsschütze 10a,10b und die Motorschütze 12a,12b auf Betriebssicherheit überwacht werden. Darüber hinaus nimmt die Sicherheitsschaltvorrichtung 2 auch eine eigene interne Überwachung vor, und zwar werden beispielsweise die Schaltelemente 6 auf ihre Funktionsfähigkeit überwacht, ebenso wie die beiden Mikroprozessoren 4a,4b kontrolliert und überwacht werden. Sämtliche Kontroll- und Überwachungsfunktionen der Sicherheitsschaltvorrichtung 2 werden gemäß dem Ausführungsbeispiel von den beiden Mikroprozessoren 4a,4b vorgenommen. Um ihre eigene Funktionsfähigkeit zu überprüfen, sind sie für eine gegenseitige Kommunikation über eine Kommunikationsverbindung 34 miteinander verbunden. Darüber hinaus übernehmen die beiden Mikroprozessoren 4a und 4b auch die Ansteuerung der einzelnen elektronischen Schaltelemente 6 über entsprechende Steuerleitungen 36.

Um neben der redundanten Auslegung der Mikroprozessoren 4a,4b auch eine diversitäre Ausführung im Sinne einer möglichst hohen Sicherheit zu erreichen, ist vorgesehen, dass die beiden Mikroprozessoren 4a,4b wechselweise unterschiedliche Funktionen wahrnehmen. Dadurch ist ausgeschlossen, dass die beiden Mikroprozessoren 4a,4b zu einem beliebigen Zeitpunkt eine identische Funktionsroutine abarbeiten. Die beiden Mikroprozessoren 4a,4b sind sowohl im Hinblick auf ihren hardwaretechnischen als auch im Hinblick auf ihren softwaretechnischen Aufbau identisch ausgebildet. Durch das wechselweise Übernehmen unterschiedlicher Funktionen ist eine quasi dynamische diversitäre Ausgestaltung verwirklicht. Unter softwaretechnischem Aufbau wird hierbei die Betriebssoftware für die Mikroprozessoren verstanden, die auch als Firmware bezeichnet wird, und üblicherweise in ihrem Nur-Lesespeicher (ROM-Speicher) hinterlegt ist.

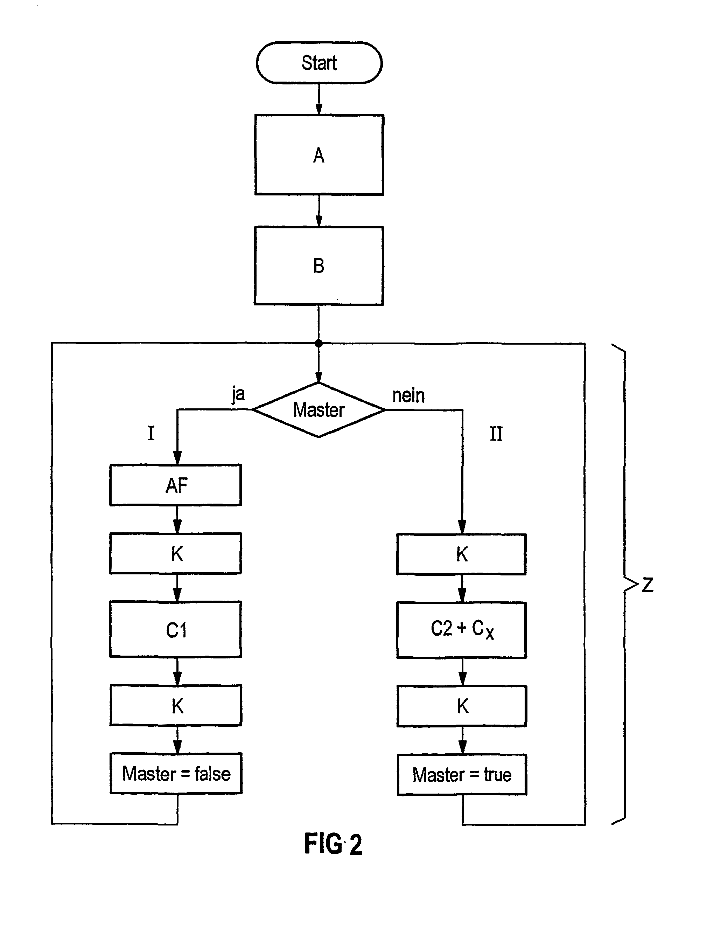

Das Verfahren zum Betrieb der Sicherheitsschaltvorrichtung 2, insbesondere der beiden Mikroprozessoren 4a,4b, wird im Folgenden im Zusammenhang mit der Figur 2 näher erläutert. Wie bereits erwähnt, werden von der Sicherheitsschaltvorrichtung 2 eine Vielzahl von Funktionen wahrgenommen. Diese lassen sich beispielsweise in Hauptfunktionen und Nebenfunktionen unterteilen. Den Hauptfunktionen werden beispielsweise die Arbeitsfunktionen AF sowie ein erster Satz von Überwachungsfunktionen C1 zugeordnet. Die Arbeitsfunktionen umfassen das Erfassen eines Einschalt- bzw. Ausschaltsignals von dem Einschaltkreis 18 bzw. Ausschaltkreis 22 und deren Weiterverarbeitung inklusive Ansteuerung der Schaltelemente 6. In die Rubrik der Nebenfunktionen werden beispielsweise ein zweiter Satz C2 sowie weitere Sätze Cₓ von Überwachungsfunktionen eingeordnet. Diese Aufteilung ist nicht zwangsläufig in dieser Weise vorzunehmen.

Derjenige Mikroprozessor, welcher die Hauptfunktionen ausführt, wird als Hautprozessor oder Master bezeichnet, wobei der andere Mikroprozessor, welcher die Nebenfunktionen abarbeitet, als Nebenprozessor oder Slave bezeichnet wird.

Bei der Inbetriebnahme der Sicherheitsschaltvorrichtung, also bei ihrem Anschluss an die Versorgungsspannung wird zunächst in einem ersten Verfahrensschritt A ermittelt und bestimmt, welcher der beiden Mikroprozessoren (z.B. 4a) als Hauptprozessor anzusehen ist. Vorzugsweise ist dabei einer der beiden Mikroprozessoren 4a,4b fest als Hauptprozessor vorgesehen, so dass dieser zunächst immer nach der Inbetriebnahme der Sicherheitsschaltvorrichtung als Hauptprozessor auftritt. Dies geschieht vorzugsweise bei der Initialisierung der Mikroprozessoren 4a und 4b. Im anschließenden Verfahrensschritt B wird die Sicherheitsschaltvorrichtung 2 initialisiert und eine interne Kontrolle aller ihrer Komponenten durchgeführt. Im Anschluss an diese Kontrolle ist die Sicherheitsschaltvorrichtung 2 betriebsbereit und es beginnt der eigentliche Ablaufzyklus Z.

Je nachdem ob der jeweilige Mikroprozessor als Hauptprozessor (Master) ausgewählt ist oder nicht wird ein masterspezifisches Ablaufprogramm I bzw. ein slavespezifisches Ablaufprogramm II gestartet. Im Falle des masterspezifischen Ablaufprogramms I werden zunächst die Arbeitsfunktionen AF abgearbeitet. Als nächstes erfolgt eine Kommunikation K mit dem zweiten Mikroprozessor (z.B. 4b), um Daten auszutauschen oder auch zur gegenseitigen Kontrolle. Im darauf folgenden Schritt wird der erste Satz von Kontrollfunktionen C1 abgearbeitet, anschließend erfolgt wiederum am Ende des Ablaufzyklusses eine Kommunikation K. Anschließend erfolgt lediglich die Umsetzung des Status vom "Master" auf "Slave". Diese Umsetzung kann auch erst nach einer definierten Anzahl von Ablaufzyklen Z erfolgen. Anschließend wird der Ablaufzyklus Z wieder von vorne gestartet.

Da sich der Mikroprozessor (z.B. 4a) in dem vorangegangenen Ablaufzyklus Z am Ende selbst auf den Status "Slave" gesetzt hat, wird daher im neuen Ablaufzyklus Z das slavespezifische Ablaufprogramm I gestartet. Dieses beginnt mit einer Kommunikation K, und zwar zum gleichen Zeitpunkt, wie auch die erste Kommunikation K im masterspezifischen Ablaufprogramm I erfolgt.

Im Anschluss daran werden Nebenfunktionen, nämlich der zweite Satz von Überwachungsfunktionen C2 sowie ein weiterer Satz von Überwachungsfunktionen Cₓ abgearbeitet. Der zweite Satz Überwachungsfunktionen C2 unterscheidet sich dabei im Hinblick auf jede einzelne Funktion vom ersten Satz Überwachungsfunktionen C1, wie sie gemäß dem masterspezifischen Ablaufprogramm I vorgenommen werden. Der weitere Satz Überwachungsfunktionen Cₓ beinhaltet sogenannte Sekundärfunktionen, die nicht bei jedem Ablaufzyklus Z durchgeführt werden. Die Arbeitsfunktionen AF und die Sätze C1,C2 von Überwachungsfunktionen stellen Primärfunktionen dar, die bei jedem Ablaufzyklus durchgeführt werden.

Es besteht eine Vielzahl von einzelnen Sätzen weiterer Überwachungsfunktionen Cₓ, die abwechselnd an dieser Stelle im Ablaufprogramm II abgearbeitet werden. Durch die Abarbeitung nur einer beschränkten Anzahl von weiteren Überwachungsfunktionen wird ein möglichst kurzer Ablaufzyklus Z, insbesondere ein Ablaufzyklus Z kleiner 30ms erreicht, so dass gewährleistet ist, dass die Arbeitsfunktionen AF zumindest innerhalb eines Zeitfensters von 30ms abgearbeitet werden. Dies ist insbesondere dann relevant, wenn der Not-Aus-Schalter 24 betätigt wird, um ein schnelles Abschalten des Motors 16 sicherzustellen.

Im Anschluss an diesen Verfahrensschritt erfolgt wiederum die Kommunikation K mit dem anderen Mikroprozessor (z.B. 4b) und anschließend das Umschalten des Status auf Master. Durch die Kommunikation K erfolgt zugleich eine zeitliche Synchronisierung der beiden Mikroprozessoren 4a,4b. Die Synchronisation bewirkt, dass jeweils nur eine der beiden Mikroprozessoren 4a,4b entweder Master oder Slave sein kann. Keinesfalls können gleichzeitig die beiden Mikroprozessoren 4a,4b Master oder Slave sein.

Der Vorteil eines derartigen Ablaufzyklusses Z ist darin zu sehen, dass jeder der Mikroprozessoren 4a,4b zu einem festen Zeitpunkt unterschiedliche Aufgaben ausführt. D.h. die Verteilung der Aufgaben ist diversitär. Gleichzeitig ist jeder der beiden Mikroprozessoren 4a,4b in der Lage sämtliche Aufgaben zu übernehmen. Die beiden Mikroprozessoren 4a,4b sind daher redundant ausgebildet. Durch die Kommunikation K der beiden Mikroprozessoren 4a,4b miteinander, insbesondere die Kommunikation K am Ende des Ablaufzyklusses Z, ist eine Synchronisation der beiden Ablaufprogramme I,II gewährleistet.

Die Gliederung in Hauptfunktionen, welche hier im Ausführungsbeispiel repräsentiert werden durch die Arbeitsfunktionen AF und dem ersten Satz Überwachungsfunktionen C1, und in Nebenfunktionen, die hier repräsentiert werden durch den zweiten Satz C2 und den weiteren Satz Cₓ an Überwachungsfunktionen, gewährleistet, dass auf den Mikroprozessoren 4a,4b unterschiedliche Routinen ablaufen.

Damit sind im Hinblick auf sicherheitstechnische Anforderungen die Voraussetzungen für die Erfüllung der Sicherheitserfordernisse gemäß der Kategorie 4 der Norm EN954-1 gegeben. Gleichzeitig bietet diese Ausbildung auch erhebliche konstruktive Vorteile. Zum einen ist durch die identische Ausbildung der beiden Mikroprozessoren 4a,4b ein Vertauschen dieser unmöglich. Aufgrund der einheitlichen Betriebssoftware ist darüber hinaus eine schnelle Entwicklung oder schnelle Änderung und Anpassung möglich, da lediglich eine Betriebssoftware verändert und dokumentiert werden muss. Insbesondere können Änderungen dadurch einfach vorgenommen werden, dass beide Mikroprozessoren 4a,4b eine einheitliche Plattform aufgrund ihres identischen Aufbaus aufweisen.

## Patentansprüche

1. Verfahren zum Betrieb einer Sicherheitsschaltvorrichtung (2), bei dem zumindest eine elektrische Einrichtung (18,22) überwacht und die Energieversorgung zu einem elektrischen Gerät (10a,10b) geschaltet wird, wobei Funktionen (AF,C1,C2,Cₓ) der Sicherheitsschaltvorrichtung (2) von zumindest zwei Mikroprozessoren (4a,4b) ausgeführt werden, die abwechselnd unterschiedliche Funktionen (AF,C1,C2,Cₓ) übernehmen, **dadurch gekennzeichnet, dass** ein Ablaufzyklus (Z) mit einer bestimmten Ablaufzeit vorgesehen ist, währenddessen der eine Mikroprozessor (4a,4b) als Hauptprozessor (Master) Hauptfunktionen (AF,C1) und der andere Mikroprozessor (4a,4b) als Nebenprozessor (Slave) Nebenfunktionen (C2,Cₓ) übernimmt, und wobei nach einem Ablaufzyklus (Z) oder nach einer definierten Anzahl von Ablaufzyklen (Z) der eine Mikroprozessor (4a,4b) in den Status des Nebenprozessors und der andere Mikroprozessor (4a,4b) in den Status des Hauptprözessors wechselt.

2. Verfahren nach Anspruch 1, bei dem die Mikroprozessoren (4a,4b) sowohl eine Überwachungsfunktion (C1,C2,Cₓ) als auch eine Arbeitsfunktion (AF) durch Ansteuern eines elektronischen Schaltelements (6,6a,6b) übernehmen.

3. Verfahren nach Anspruch 1 oder 2, bei dem Mikroprozessoren (4a,4b) mit dem gleichen Aufbau verwendet werden.

4. Verfahren nach einem der vorhergehenden Ansprüche, bei dem die Mikroprozessoren (4a,4b) mit der gleichen Betriebssoftware arbeiten.

5. Verfahren nach einem der vorhergehenden Ansprüche, bei dem während jedes Ablaufzyklusses (Z) bestimmte Primärfunktionen (GF,C1,C2) und zusätzlich optionale Sekundärfunktionen (Cₓ) ausgeführt werden, wobei während verschiedener Ablaufzyklen (Z) unterschiedliche Sekundärfunktionen (Cₓ) ausgeführt werden.

6. Verfahren nach einem der vorhergehenden Ansprüche, bei dem die Zeitdauer des Ablaufzyklusses (Z) kleiner als 100ms , insbesondere kleiner als 30ms ist.

7. Verfahren nach einem der vorhergehenden Ansprüche, bei dem vom Hauptprozessor (4a,4b) und vom Nebenprozessor (4a,4b) unterschiedliche Ablaufprogramme (I,II) während eines Ablaufzyklusses (Z) ausgeführt werden, wobei die Ablaufprogramme (I,II) miteinander synchronisiert werden.

8. Verfahren nach einem der vorhergehenden Ansprüche, bei dem die Mikroprozessoren (4a,4b) miteinander kommunizieren.

9. Verfahren nach den Ansprüchen 7 und 8, bei dem die Synchronisation durch die Kommunikation (K) der beiden Mikroprozessoren (4a,4b) miteinander erfolgt, indem sowohl im Ablaufprogramm (I) des Hauptprozessors (4a,4b) als auch in dem Ablaufprogramm (II) des Nebenprozessors (4a,4b) die Kommunikation (K) zum gleichen Zeitpunkt vorgesehen ist.

10. Verfahren nach Anspruch 8 oder 9, bei dem am Ende des Ablaufzyklusses(Z) die Kommunikation (K) erfolgt.

11. Verfahren nach einem der vorhergehenden Ansprüche, bei dem bei der Inbetriebnahme der Sicherheitsschaltvorrichtung (2) ermittelt wird, welcher Mikroprozessor (4a,4b) zunächst als Hauptprozessor und welcher als Nebenprozessor arbeitet.

12. Verfahren nach Anspruch 11, bei dem einer der Mikroprozessoren (4a,4b) zunächst grundsätzlich als Hauptprozessor ausgewählt wird.

13. Sicherheitsschaltvorrichtung (2) mit einem insbesondere elektronischen Schaltelement (6,6a,6b) zur Unterbrechung der Energieversorgung eines elektrischen Geräts (10a,10b) und mit zumindest zwei Mikroprozessoren (4a,4b), die jeweils mit zumindest einer elektrischen Einrichtung (18,22) zu deren Überwachung sowie mit dem Schaltelement (6,6a,6b) zu dessen Ansteuerung verbunden sind, wobei die Mikroprozessoren (4a,4b) derart ausgebildet sind, dass sie abwechselnd unterschiedliche Funktionen (AF,C1,C2,Cₓ) ausüben, **dadurch gekennzeichnet, dass** ein Ablaufzyklus (Z) mit einer bestimmten Zykluszeit vorgesehen ist, während dessen der erste Mikroprozessor (4a,4b) als Hauptprozessor (Master) Hauptfunktionen und der zweite Mikroprozessor (4a,4b) als Nebenprozessor (Slave) Nebenfunktionen übernimmt, und wobei nach einem Ablaufzyklus (Z) oder nach einer definierten Anzahl von Ablaufzyklen (Z) der erste Mikroprozessor(4a,4b) in den Status des Nebenprozessors und der zweite Mikroprozessor (4a,4b) in den Status des Hauptprozessors wechselt.

14. Vorrichtung (2) nach Anspruch 13, bei der die Mikroprozessoren (4a,4b) den gleichen Aufbau aufweisen.

15. Vorrichtung (2) nach Anspruch 13 oder 14, bei der die Mikroprozessoren (4a,4b) die gleiche Betriebssoftware aufweisen.

16. Vorrichtung (2) nach einem der Ansprüche 13 bis 15, bei der die Mikroprozessoren (4a,4b) über eine Kommunikationsverbindung (34) miteinander verbunden sind.

## Claims

1. Method for operating a safety switching apparatus (2), in which at least one electrical unit (18, 22) is monitored and the power supply to an electrical device (10a, 10b) is switched, whereby functions (AF, C1, C2, Cₓ) of the safety switching apparatus (2) are executed by at least two microprocessors (4a, 4b), which alternately assume different functions (AF, C1, C2, Cₓ),
**characterised in that** an execution cycle (2) is provided with a defined execution time, during which the one microprocessor (4a, 4b) assumes master functions (AF, C1) as a master processor and the other microprocessor (4a, 4b) assumes slave functions as a slave processor, and whereby after one execution cycle (Z) or after a defined number of execution cycles (Z) the one microprocessor (4a, 4b) switches to the status of the slave processor and the other microprocessor (4a, 4b) switches to the status of the master processor.

2. Method according to Claim 1, in which the microprocessors (4a, 4b) assume both a monitoring function (C1, C2, Cₓ) and an operating function (AF) by controlling an electronic switching element (6, 6a, 6b).

3. Method according to Claim 1 or 2, in which microprocessors (4a, 4b) with the same structure are used.

4. Method according to one of the preceding claims, in which the microprocessors (4a, 4b) work with the same operating software.

5. Method according to one of the preceding claims, in which during each execution cycle (Z) defined primary functions (GF, C1, C2) and additionally optional secondary functions (Cₓ) are executed, whereby during different execution cycles (Z) different secondary functions (Cₓ) are executed.

6. Method according to one of the preceding claims, in which the duration of the execution cycle (Z) is less than 100 ms, in particular less than 30 ms.

7. Method according to one of the preceding claims, in which different sequential programs (I, II) are executed by the master processor (4a, 4b) and by the slave processor (4a, 4b) during an execution cycle (Z), whereby the sequential programs (I, II) are synchronised with one another.

8. Method according to one of the preceding claims, in which the microprocessors (4a, 4b) communicate with one another.

9. Method according to Claims 7 and 8, in which the synchronisation takes place as a result of communication (K) by the two microprocessors (4a, 4b) with one another, in that both in the sequential program (I) of the master processor (4a, 4b) and in the sequential program (II) of the slave processor (4a, 4b) communication (K) is provided for at the same point in time.

10. Method according to Claims 8 or 9, in which communication (K) takes place at the end of the execution cycle (Z).

11. Method according to one of the preceding claims, in which on start-up of the safety switching apparatus (2) it is determined which microprocessor (4a, 4b) works first as a master processor and which as a slave processor.

12. Method according to Claim 11, in which one of the microprocessors (4a, 4b) is always selected first as a master processor.

13. Safety switching apparatus (2) with a switching element (6, 6a, 6b), in particular an electronic switching element, to interrupt the power supply of an electrical device (10a, 10b) and with at least two microprocessors (4a, 4b), each of which is connected to at least one electrical unit (18, 22) for monitoring the latter and to the switching element (6, 6a, 6b) for controlling the latter, whereby the microprocessors (4a, 4b) are designed such that they alternately exercise different functions (AF, C1, C2, Cₓ), **characterised in that** an execution cycle (Z) is provided with a defined cycle time, during which the first microprocessor (4a, 4b) assumes master functions as a master processor and the second microprocessor (4a, 4b) assumes slave functions as a slave processor, and whereby after an execution cycle (Z) or after a defined number of execution cycles (Z) the first microprocessor (4a, 4b) switches to the status of the slave processor and the second microprocessor (4a, 4b) switches to the status of the master processor.

14. Apparatus (2) according to Claim 13, in which the microprocessors (4a, 4b) have the same structure.

15. Apparatus (2) according to Claim 13 or 14, in which the microprocessors (4a, 4b) have the same operating software.

16. Apparatus (2) according to one of Claims 13 to 15, in which the microprocessors (4a, 4b) are connected to one another via a communications link (34).

## Revendications

1. Procédé pour faire fonctionner un dispositif de commutation de sécurité (2), dans lequel on surveille au moins un dispositif électrique (18, 22) et on commute l'alimentation en énergie vers un appareil électrique (10a, 10b), des fonctions (AF, C1, C2, Cₓ) du dispositif de commutation de sécurité (2) étant exécutées par au moins deux microprocesseurs (4a, 4b) qui prennent en charge en alternance des fonctions différentes (AF, C1, C2, Cₓ), **caractérisé par le fait qu'**il est prévu un cycle d'exécution (Z) avec un certain temps d'exécution pendant lequel un premier microprocesseur (4a, 4b) prend en charge en tant que processeur principal (maître) des fonctions principales (AF, C1) et l'autre microprocesseur (4a, 4b) prend en charge en tant que processeur auxiliaire (esclave) des fonctions auxiliaires (C2, Cₓ), le premier microprocesseur (4a, 4b) prenant le statut de processeur auxiliaire et l'autre microprocesseur (4a, 4b) prenant le statut de processeur principal après un cycle d'exécution (Z) ou après un nombre défini de cycles d'exécution (Z).

2. Procédé selon la revendication 1, dans lequel les microprocesseurs (4a, 4b) prennent en charge aussi bien une fonction de surveillance (C1, C2, Cₓ) qu'une fonction de travail (AF) en commandant un élément commutateur électronique (6, 6a, 6b).

3. Procédé selon la revendication 1 ou 2, dans lequel on utilise des microprocesseurs (4a, 4b) ayant la même structure.

4. Procédé selon l'une des revendications précédentes, dans lequel les microprocesseurs (4a, 4b) travaillent avec le même logiciel d'exploitation.

5. Procédé selon l'une des revendications précédentes, dans lequel on exécute pendant chaque cycle d'exécution (Z) des fonctions primaires déterminées (GF, C1, C2) et en plus des fonctions secondaires optionnelles (Cₓ), des fonctions secondaires différentes (Cₓ) étant exécutées pendant des cycles d'exécution (Z) différents.

6. Procédé selon l'une des revendications précédentes, dans lequel la durée du cycle d'exécution (Z) est inférieure à 100 ms, notamment inférieure à 30 ms.

7. Procédé selon l'une des revendications précédentes, dans lequel des programmes séquentiels différents (I, II) sont exécutés par le processeur principal (4a, 4b) et par le processeur auxiliaire (4a, 4b) pendant un cycle d'exécution (Z), les programmes séquentiels (I, II) étant synchronisés entre eux.

8. Procédé selon l'une des revendications précédentes, dans lequel les microprocesseurs (4a, 4b) communiquent entre eux.

9. Procédé selon les revendications 7 et 8, dans lequel la synchronisation s'effectue au moyen de la communication (K) des deux microprocesseurs (4a, 4b) entre eux, la communication (K) étant prévue au même instant aussi bien dans le programme séquentiel (I) du processeur principal (4a, 4b) que dans le programme séquentiel (II) du processeur auxiliaire (4a, 4b).

10. Procédé selon la revendication 8 ou 9, dans lequel la communication (K) s'effectue à la fin du cycle d'exécution (Z).

11. Procédé selon l'une des revendications précédentes, dans lequel, lors de la mise en service du dispositif de commutation de sécurité (2), on détermine quel microprocesseur (4a, 4b) travaille d'abord comme processeur principal et quel microprocesseur travaille d'abord comme processeur auxiliaire.

12. Procédé selon la revendication 11, dans lequel on sélectionne d'abord fondamentalement l'un des microprocesseurs (4a, 4b) comme processeur principal.

13. Dispositif de commutation de sécurité (2) comportant un élément commutateur notamment électronique (6, 6a, 6b) pour l'interruption de l'alimentation en énergie d'un appareil électrique (10a, 10b) et au moins deux microprocesseurs (4a, 4b) qui sont reliés à chaque fois à au moins un dispositif électrique (18, 22) pour sa surveillance ainsi qu'à l'élément commutateur (6, 6a, 6b) pour sa commande, les microprocesseurs (4a, 4b) étant conçus de telle sorte qu'ils exécutent en alternance différentes fonctions (AF, C1, C2, Cₓ), **caractérisé par le fait qu'**il est prévu un cycle d'exécution (Z) avec un certain temps d'exécution pendant lequel un premier microprocesseur (4a, 4b) prend en charge en tant que processeur principal (maître) des fonctions principales et l'autre microprocesseur (4a, 4b) prend en charge en tant que processeur auxiliaire (esclave) des fonctions auxiliaires, le premier microprocesseur (4a, 4b) prenant le statut de processeur auxiliaire et l'autre microprocesseur (4a, 4b) prenant le statut de processeur principal après un cycle d'exécution (Z) ou après un nombre défini de cycles d'exécution (Z).

14. Dispositif (2) selon la revendication 13, dans lequel les microprocesseurs (4a, 4b) ont la même structure.

15. Dispositif (2) selon la revendication 13 ou 14, dans lequel les microprocesseurs (4a, 4b) ont le même logiciel d'exploitation.

16. Dispositif (2) selon l'une des revendications 13 à 15, dans lequel les microprocesseurs (4a, 4b) sont reliés ensemble par l'intermédiaire d'une liaison de communication (34).
